# EUROPÄISCHE PATENTSCHRIFT

(11) **EP 1 414 128 B1**
(45) Veröffentlichungstag und Bekanntmachung des Hinweises auf die Patenterteilung: **28.05.2008**
(21) Anmeldenummer: 03027233.0
(22) Anmeldetag: 15.04.2000
(51) Int. Cl.: A45D 27/46

(54) **Reinigungsgerät für ein Elektrokleingerät**
Cleaning apparatus for a small electric appliance
Appareil de nettoyage d'un petit appareil électrique

(30) Priorität: 18.05.1999 DE 19921677
(43) Veröffentlichungstag der Anmeldung: 28.04.2004
(62) Teilanmeldung aus: 00108324.5
(73) Patentinhaber: Braun GmbH, 61476 Kronberg (DE)
(72) Erfinder: Wohlrabe, Frank, 65719 Hofheim (DE)

(56) Entgegenhaltungen:
- EP-A- 0 664 973
- DE-A- 19 727 639
- US-A- 5 536 979
- US-A- 5 861 729
- USER MANUAL, BRAUN DENTAL CENTER OC 30, TYPE 4803, November 1990 (1990-11), Seite 3-5, XP002168536

## Beschreibung

Die Erfindung betrifft ein Reinigungsgerät für ein Elektrokleingerät, das beispielsweise ein elektrisches Haarschneide- oder -entfemungsgerät oder eine elektrische Zahnbürste sein kann, vorzugsweise jedoch ein Reinigungsgerät für einen elektrischen Rasierapparat.

In der DE 198 17 273 sind ein Verfahren zur Datenübertragung zwischen einem Elektrokleingerät, beispielsweise einem elektrischen Haarschneidegerät, einer elektrischen Zahnbürste oder einem Haushaltsgerät, und einem mit diesem verbindbaren elektrischen Zusatzgerät, beispielsweise einem Lade-, Reinigungs- oder Diagnosegerät, sowie entsprechend ausgestaltete Geräte beschrieben. Die Datenübertragung erfolgt auf elektrischem und/oder magnetischem Wege, beispielsweise bei einem Elektrokleingerät mit Netzanschlußbuchse über die Netzanschlußbuchse, bei einem primärbatteriebetriebenen Elektrokleingerät über die Batteriekontakte. Unter Datenübertragung ist auch die Übertragung von Steuerbefehlen zu verstehen, mit denen beispielsweise vom Zusatzgerät aus bestimmte Funktionen des Elektrokleingeräts aktiviert werden können. Handelt es sich beispielsweise beim Elektrokleingerät um einen elektrischen Rasierapparat und beim Zusatzgerät um ein Rasierer-Reinigungsgerät, wie es in der DE 44 02 236 A1 beschrieben ist, so kann das Reinigungsgerät beispielsweise zum richtigen Zeitpunkt im Reinigungszyklus den Rasierer ein- und ausschalten und erforderlichenfalls auch einen im Rasierer enthaltenen Akkumulator aufladen.

Aus der DE 196 06 719 C2 ist ein elektrischer Rasierapparat mit einem Controller bekannt, der ein die Notwendigkeit einer Reinigung des Rasierapparats anzeigendes Signal abgeben kann, sowie eine Reinigungsvorrichtung für einen Rasierapparat, die gleichzeitig auch als Halterung für den Rasierapparat dient. Ist der Rasierapparat in die Reinigungsvorrichtung eingelegt, kann der Controller über den Netzkontakt des Rasierapparats mit der Reinigungsvorrichtung so verbunden sein, daß eine Signalübertragung zwischen dem Rasierapparat und der Reinigungsvorrichtung möglich ist. Damit die Reinigungsvorrichtung nicht unnötigerweise bei jedem Ablegen des Rasierapparats einen Reinigungsvorgang durchführt, wird diese nur dann aktiviert, wenn der Controller ein entsprechendes Signal der Reinigungsvorrichtung zuführt. Daher kann ein Rasierapparat ohne einen ein Reinigungssignal abgebenden Controller in diesem Reinigungsgerät nicht gereinigt werden.

Es ist Aufgabe der vorliegenden Erfindung, ein Reinigungsgerät für ein Elektrokleingerät anzugeben, das besonders einfach bedient werden kann.

Zur Lösung dieser Aufgabe weist ein erfindungsgemäßes Reinigungsgerät mindestens einen Anschluß auf, über den es mit dem Elektrokleingerät elektrisch und/oder magnetisch verbindbar ist. Mit einer Erkennungseinrichtung kann das Reinigungsgerät automatisch erkennen, ob es mit einem Elektrokleingerät verbunden ist, sodaß es nicht erforderlich ist, daß das Elektrokleingerät ein Signal abgibt oder ein Benutzer einen Schalter oder eine sonstige Betätigungsvorrichtung bedient. Auf diese Weise erhöht sich der Bedienungskomfort und wird auch eine Fehlbedienung ausgeschlossen. Außerdem kann die sonst erforderliche Betätigungsvorrichtung am Gerät weggelassen werden, wodurch sich auch ein nennenswerter Kostenvorteil ergibt.

Eine besonders einfache Erkennungseinrichtung überwacht eine am Anschluß des Reinigungsgeräts herrschende elektrische und/oder magnetische Größe. Beispielsweise wird sich bei einem elektrischen Anschluß mit mindestens zwei Anschlußklemmen der elektrische Widerstand oder die Spannung zwischen den Klemmen ändern, wenn die Geräte miteinander verbunden oder voneinander getrennt werden. Entsprechendes gilt auch bei einem magnetischen oder elektromagnetischen Anschluß. Ändert sich beispielsweise ausgehend von dem Zustand, in dem kein Elektrokleingerät mit dem Reinigungsgerät verbunden ist, die elektrische und/oder magnetische Größe über ein bestimmtes Mindestmaß hinaus, so liefert die Erkennungseinrichtung ein entsprechendes Signal, das die Verbindung der Geräte signalisiert. Vorzugsweise wertet die Erkennungseinrichtung jedoch nicht die Änderung der elektrischen und/oder magnetischen Größe aus, sondern enthält einen Komparator, der den Betrag der elektrischen und/oder magnetischen Größe mit mindestens einem Referenzwert vergleicht. Liegt beispielsweise der Betrag der am Anschluß herrschenden elektrischen und/oder magnetischen Größe unter dem Referenzwert, so ist ein Elektrokleingerät mit dem Reinigungsgerät verbunden und umgekehrt.

Gemäß einer bevorzugten Weiterbildung der Erfindung, ist mit der Erkennungseinrichtung auch der Typ des gerade mit dem Reinigungsgerät verbundenen Elektrokleingeräts feststellbar. Daher ist ein erfindungsgemäßes Reinigungsgerät über eine weitere Anschlußklemme mit dem Elektrokleingerät verbindbar, und weist beispielsweise einen Mikrocontroller auf, der über einen von ihm steuerbaren Schalter eine Signalquelle, insbesondere eine Spannungsquelle mit dieser Anschlußklemme verbindet: je nach dem, ob sich daraufhin die elektrische und/oder magnetische Größe zwischen den beiden anderen Anschlußklemmen ändert, ist entweder ein erster oder ein zweiter Gerätetyp mit dem Reinigungsgerät verbunden.

Wenn es sich beispielsweise beim Reinigungsgerät um ein Reinigungs- und Ladegerät für Rasierapparate handelt, das nach dem aus der DE 44 02 236 A1 bekannten Reinigungsprogramm arbeitet, bei dem der Rasierapparat während der Reinigung vom Reinigungsgerät ein- und ausgeschaltet wird, um eine optimale Reinigungswirkung zu erzielen, so muß das Reinigungs- und Ladegerät beispielsweise erkennen können, ob der angeschlossene Rasierapparat einen Akkumulator enthält oder nicht. Bei einem Rasierer mit eingebautem Akkumulator, dessen Motor nur aus dem Akkumulator Strom entnehmen kann, muß nämlich der Akkumulator gegebenfalls erst noch aufgeladen werden, bevor das Reinigungsprogramm ablaufen kann. Rasierer ohne Akkumulator werden dagegen während der Reinigung direkt vom Reinigungsgerät aus mit Strom versorgt.

Bei einer anderen Ausführung weist das Reinigungsgerät mehrere Komparatoren auf, die die an den beiden Anschlußklemmen des Reinigungsgeräts herrschende elektrische und/oder magnetische Größe mit mehreren Referenzwerten vergleichen. Je nach dem zwischen welchen Referenzwerten der Betrag der elektrischen und/oder magnetischen Größe liegt, ist entweder ein bestimmter Typ eines Elektrokleingeräts oder gar kein Elektrokleingerät mit dem Reinigungsgerät verbunden.

Die Erfindung wird nachstehend anhand eines Reinigungsgeräts und eines elektrischen Rasierapparats als Ausführungsbeispiel für ein Reinigungsgerät und ein Elektrokleingerät erläutert, die in den Zeichnungen dargestellt sind. Weitere Ausgestaltungen sind in der Beschreibung beschrieben. Es zeigen:
- Fig. 1: eine Prinzipdarstellung einer Erkennungsschaltung für ein erfindungsgemäßes Reinigungsgerät und einen elektrischen Rasierapparat;
- Fig. 2: ein vereinfachtes Schaltbild eines erfindungsgemäßen Reinigungsgeräts und eines elektrischen Rasierapparats, der einen Akkumulator enthält;
- Fig. 3: das vereinfachte Schaltbild des erfindungsgemäßen Reinigungsgeräts gemäß Fig. 2 und eines Rasierapparats, der keinen Akkumulator enthält;
- Fig. 4: das vereinfachte Schaltbild gemäß Fig. 2, jedoch mit einem Rasierapparat dessen Akkumulator vom erfindungsgemäßen Reinigungsgerät aufgeladen werden kann.

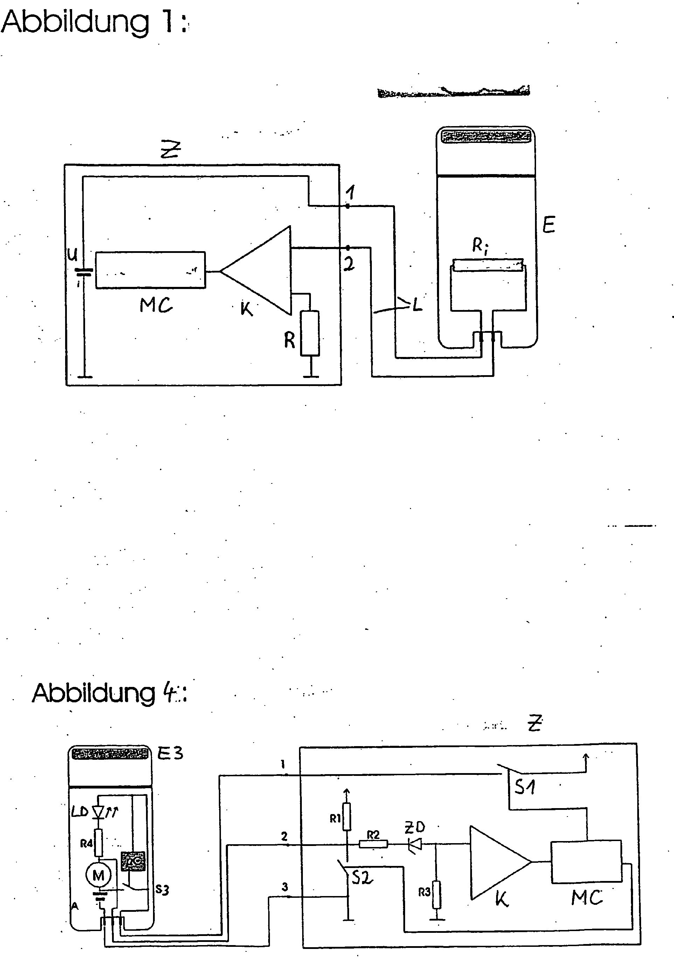

Ein erfindungsgemäßes Reinigungsgerät Z enthält gemäß Fig. 1 eine Spannungsquelle U, die mit einer ersten Anschlußklemme 1 des Reinigungsgeräts Z verbunden ist. Das Reinigungsgerät Z enthält ferner einen Mikrocontroller MC, der mit dem Ausgang eines Komparators K verbunden ist. An einem Eingang des Komparators K liegt eine Referenzspannung an, die durch einen Widerstand R erzeugt wird, wogegen der andere Eingang mit einer zweiten Anschlußklemme 2 des Reinigungsgeräts Z verbunden ist. Ein Elektrokleingerät E weist ebenfalls zwei Anschlußklemmen auf, die über eine elektrische Leitung L mit den beiden Anschlußklemmen 1, 2 des Reinigungsgeräts Z verbunden sind. Das Elektrokleingerät E besitzt einen Innenwiderstand, der in Fig. 1 schematisch durch einen zwischen die Anschlußklemmen des Elektrokleingeräts E geschalteten Widerstand Rᵢ dargestellt ist.

Das Reinigungsgerät Z mißt bei diesem Ausführungsbeispiel ständig den Widerstand an seinen Anschlußklemmen 1, 2, der praktisch unendlich groß ist, wenn kein Elektrokleingerät E angeschlossen ist. Ist jedoch ein Elektrokleingerät E mit den Anschlußklemmen 1, 2 des Reinigungsgeräts Z verbunden, fließt aufgrund der von der Spannungsquelle U gelieferten Spannung ein Strom durch den Innenwiderstand des Elektrokleingeräts E, sodaß sich an der zweiten Anschlußklemme 2 des Reinigungsgeräts Z eine entsprechende Spannung einstellt, die vom Komparator K mit der Referenzspannung verglichen wird. Ist der Innenwiderstand des Elektrokleingeräts E klein genug, wechselt der Ausgang des Komparators von "low" auf "high" oder umgekehrt. Dadurch kann der Mikrocontroller MC erkennen, daß das Reinigungsgerät Z mit einem Elektrokleingerät E verbunden ist.

Bei anderen Ausführungen erfindungsgemäßer Geräte sind mehr als zwei elektrische Anschlußklemmen vorhanden, von denen beispielsweise zwei für die Stromversorgung des Elektrokleingeräts und eine dritte speziell für die Erkennung der Verbindung und/oder des Typs vorgesehen ist. Dazu ist die dritte Anschlußklemme beispielsweise mit einem sogenannten pull-up oder pull-down Widerstand beschaltet, der je nach Typ des Elektrokleingeräts unterschiedlich groß ist. Das Reinigungsgerät kann dann anhand des gemessenen Widerstands bzw. der an der dritten Anschlußklemme herrschenden Spannung den Typ des Elektrokleingeräts erkennen. Auch kann statt einer elektrischen Verbindung eine induktive Kopplung zwischen beispielsweise einem Ladegerät und einem Elektrokleingerät vorgesehen sein.

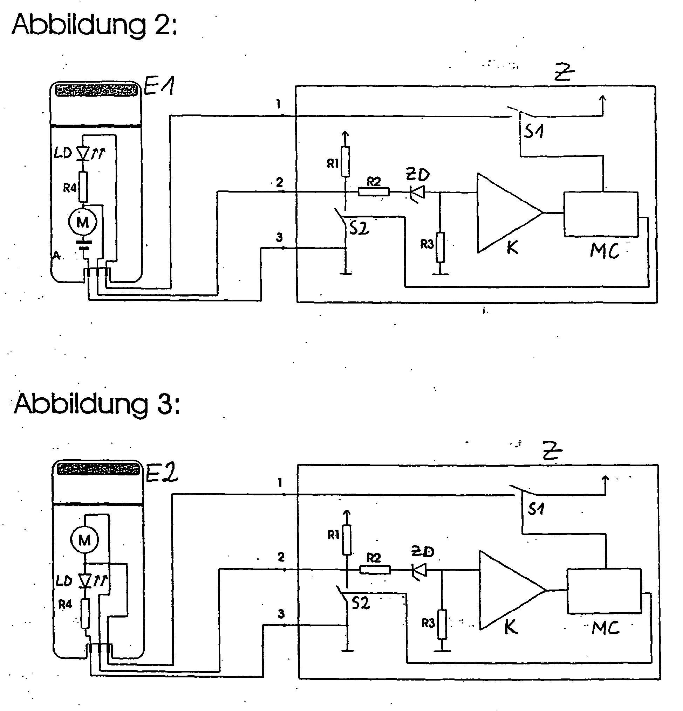

Das in den Figuren 2, 3 und 4 vereinfacht dargestellte Reinigungsgerät Z weist drei Anschlußklemmen auf. Die erste Anschlußklemme 1 ist über einen ersten Schalter S1 mit einer durch einen Pfeil symbolisierten Spannungsquelle verbunden, an die ferner das eine Ende eines ersten Widerstands R1 angeschlossen ist. Das andere Ende des ersten Widerstands R1 ist mit der zweiten Anschlußklemme 2 verbunden. Zwischen der zweiten und dritten Anschlußklemme befindet sich ein zweiter Schalter S2. Beide Schalter S1, S2 sind durch einen Mikrocontroller MC steuerbar. Die dritte Anschlußklemme 3 ist mit Masse verbunden. Die zweite Anschlußklemme 2 ist außerdem mit dem einen Ende eines zweiten Widerstands R2 verbunden. Das andere Ende des zweiten Widerstands R2 ist mit der Kathode einer Zenerdiode ZD verbunden. Die Anode der Zenerdiode ZD ist mit einem ersten Eingang eines Komparators K und dem einen Ende eines dritten Widerstands R3 verbunden. Das andere Ende des dritten Widerstands R3 ist mit Masse verbunden. Der Ausgang des Komparators K ist mit dem Mikrocontroller MC verbunden. Ein zweiter in den Figuren 2, 3 und 4 nicht dargestellter Eingang des Komparators K ist mit einer ebenfalls nicht dargestellten Referenzspannungsquelle verbunden.

In Fig. 2 ist ferner als Ausführungsbeispiel für ein Elektrokleingerät ein elektrischer Rasierapparat E1 dargestellt, der einen Akkumulator A enthält, wogegen in Fig. 3 ein elektrischer Rasierapparat E2 dargestellt ist, der keinen Akkumulator enthält. Beide Rasierapparate besitzen je drei Anschlußklemmen, die mit den entsprechenden Anschlußklemmen 1, 2, 3 des Reinigungsgeräts Z elektrisch verbunden sind. Außerdem enthalten beide Rasierapparate einen Motor M und eine Reihenschaltung aus einem vierten Widerstand R4 und einer Leuchtdiode LD. Bei dem in Fig. 2 dargestellten Rasierapparat E1 liegt eine Reihenschaltung aus dem Akkumulator A und dem Motor M zwischen der zweiten und dritten Anschlußklemme und die Reihenschaltung aus dem vierten Widerstand R4 und der Leuchtdiode LD zwischen der ersten und zweiten Anschlußklemme. Bei dem in Fig. 3 dargestellten Rasierapparat E2 liegt der Motor M zwischen der ersten und zweiten Anschlußklemme und die Reihenschaltung aus dem vierten Widerstand R4 und der Leuchtdiode LD zwischen der ersten und dritten Anschlußklemme.

Nachfolgend wird anhand der Figuren 2 und 3 ein Verfahren beschrieben, mit dem das Reinigungsgerät erkennen kann, ob ein Rasierapparat mit den Anschlußklemmen verbunden ist, und um welchen Typ es sich handelt. Die zur Durchführung dieses Verfahrens nötigen Schritte werden vom Mikrocontroller MC gesteuert.

In einer Ausgangsstellung, in der das Reinigungsgerät nicht mit einem Rasierapparat verbunden ist, sind die beiden Schalter S1, S2 nicht geschlossen. Dann ist die Zenerdiode ZD leitend, und es liegt am ersten Eingang des Komparators K eine Spannung an, die durch die Spannung der Spannungsquelle und die Widerstände des ersten, zweiten und dritten Widerstands R1, R2, R3 bestimmt ist. Die genannten Widerstände und die Spannung der Referenzspannungsquelle sind so dimensioniert, daß der Ausgang des Komparators K "high" ist. Wird jetzt ein Rasierapparat mit dem Reinigungsgerät verbunden, liegt an der zweiten Anschlußklemme 2 nur noch eine niedrigere Spannung an, die im Falle eines Rasierers mit Akkumulator A ungefähr der Akkumulatorspannung entspricht, und im Fall eines Rasierers ohne Akkumulator durch die Widerstände der Leuchtdiode LD und des ersten und vierten Widerstands R1, R4 bestimmt ist. Daher sperrt die Zenerdiode ZD, und der dritte Widerstand R3 verbindet den ersten Eingang des Komparators K mit Masse, woraufhin der Ausgang des Komparators K "low" wird. Der Mikrocontroller MC kann am "low"-Potential erkennen, daß ein Rasierer mit dem Reinigungsgerät verbunden ist.

Um anschließend den Typ des angeschlossenen Rasierers festzustellen, wird der erste Schalter S1 vom Mikrocontroller MC kurzzeitig geschlossen. Bei einem Rasierer mit Akkumulator A ändert sich dadurch die Spannung an der zweiten Anschlußklemme 2 nicht, sondern ist weiterhin von der Spannung des Akkumulators A bestimmt. Daher bleibt auch der Ausgang des Komparators K auf "low". Bei einem Rasierer ohne Akkumulator wird dadurch jedoch dem ersten Widerstand R1 der Motor M des Rasierers parallelgeschaltet, sodaß die Spannung an der zweiten Anschlußklemme 2 kurzzeitig so groß wird, daß die Zenerdiode ZD kurzzeitig leitend wird, und der Ausgang des Komparators K kurzzeitig "high" wird. Geht also beim kurzzeitigen Schließen des ersten Schalters S1 der Ausgang des Komparators K ebenfalls kurzzeitig auf "high", so erkennt daran der Mikrocontroller MC, daß ein Rasierer ohne Akkumulator angeschlossen ist. Bleibt der Ausgang des Komparators K jedoch auf "low", so ist ein Rasierer mit Akkumulator A angeschlossen.

Soll während des Ablaufs eines Reinigungsvorgangs der Motor M des Rasierers eingeschaltet werden, so wird durch den Mikrocontroller MC der erste S1 und der zweite Schalter S2 geschlossen. Bei einem angeschlossenen Rasierer mit Akkumulator A wird dadurch der Motor M durch den Akkumulator A mit Strom versorgt. Ist jedoch ein Rasierer ohne Akkumulator angeschlossen, wird dadurch der Motor M vom Reinigungsgerät mit Strom versorgt.

Bei einer in Fig. 4 dargestellten bevorzugten Ausführung weisen das Reinigungsgerät und das Elektrokleingerät eine Einrichtung zur Datenübertragung auf, wie sie beispielsweise in der eingangs genannten DE 198 17 273 beschrieben ist, deren Inhalt durch ausdrückliche Bezugnahme zum Gegenstand der vorliegenden Anmeldung gemacht wird. Die Datenübertragung erfolgt über die erste Anschlußklemme 1. Als Ausführungsbeispiel für ein Elektrokleingerät ist in Fig. 4 ein Rasierapparat E3 dargestellt, der einen Akkumulator A und einen Mikrocontroller C enthält, der für die Datenübertragung erforderlich ist. Der Rasierer weist ferner einen dritten Schalter S3 auf, der durch den Mikrocontroller C steuerbar ist. Zur Aufladung des Akkumulators A schließt der Mikrocontroller C des Rasierers E3 den dritten Schalter S3 und der Mikrocontroller MC des Reinigungsgeräts Z den ersten Schalter S1, wodurch eine in Fig. 4 nicht dargestellte Ladeschaltung im Rasierer über die erste Anschlußklemme 1 mit der Spannungsquelle des Reinigungsgeräts verbunden wird. Das Reinigungsgerät dient somit auch als Ladegerät für den im Rasierer vorhandenen Akkumulator A.

Die Datenübertragung erfolgt in der Weise, daß das Reinigungsgerät dem Elektrokleingerät einen elektrischen Strom, eine elektrische Spannung oder ein elektrisches und/oder magnetisches Feld zuführt, der/die/das je nach gewünschter Richtung der Datenübertragung vom Elektrokleingerät oder vom Reinigungsgerät mit einem entsprechenden Datensignal moduliert wird. Im jeweiligen empfangenden Gerät erfolgt eine Demodulation. Bei einem besonders einfach realisierbaren Verfahren erfolgt die Modulation durch Ein/Aus-Schalten des Stroms bzw. der Spannung oder des Feldes.

Soll bei den in Fig. 4 dargestellten Geräten eine Datenübertragung vom Reinigungsgerät Z zum Elektrokleingerät E3 erfolgen, erzeugt der Mikrokontroller MC im Reinigungsgerät ein Datensignal, mit dem er den ersten Schalter S1 ansteuert, wodurch dieser entsprechend geöffnet und geschlossen wird, sodaß die an der ersten Anschlußklemme 1 anliegende Spannung durch Ein/Aus-Schalten amplitudenmoduliert wird. Gleichzeitig stellt der Mikrocontroller C des Elektrokleingeräts E3 mit Hilfe eines Sensors, beispielsweise eines Komparators, fest, daß die Spannung moduliert ist, und demoduliert die empfangenen Daten. Eine Datenübertragung in umgekehrter Richtung, d.h. vom Elektrokleingerät ans Reinigungsgerät, kann in entsprechender Weise erfolgen. Somit können die Geräte durch Übertragung entsprechender Steuersignale die für das Aufladen des Akkumulators A erforderliche Stellung der Schalter herbeiführen. Ist der Akkumulator ausreichend geladen, kann der Rasierer ein entsprechendes Datensignal ans Reinigungsgerät übertragen, wodurch der erste Schalter S1 geöffnet und das Aufladen beendet wird.

## Patentansprüche

1. Reinigungsgerät (Z) für ein Elektrokleingerät (E) mit mindestens einem Anschluß, über den es mit dem Elektrokleingerät (E) elektrisch und/oder magnetisch verbindbar ist,
**dadurch gekennzeichnet,**
**daß** das Reinigungsgerät (Z) eine Erkennungseinrichtung aufweist, mit der das Reinigungsgerät (Z) erkennen kann, ob es mit dem Elektrokleingerät (E) elektrisch und/oder magnetisch verbunden ist.

2. Reinigungsgerät (Z) nach Anspruch 1, **dadurch gekennzeichnet,**
**daß** die Erkennungseinrichtung ferner eine Einrichtung zur Unterscheidung zwischen verschiedenen Typen von Elektrokleingeräten (E) aufweist.

3. Reinigungsgerät (Z) nach Anspruch 1 oder 2, **dadurch gekennzeichnet,**
**daß** die Erkennungseinrichtung eine am Anschluß herrschende elektrische und/oder magnetische Größe überwacht.

4. Reinigungsgerät (Z) nach Anspruch 1, 2 oder 3, **dadurch gekennzeichnet,**
**daß** die Erkennungseinrichtung mindestens einen Komparator (K) aufweist, der die zwischen zwei Anschlußklemmen (2, 3) herrschende elektrische und/oder magnetische Größe mit mindestens einem Referenzwert vergleicht.

5. Reinigungsgerät (Z) nach Anspruch 2, 3 oder 4, **dadurch gekennzeichnet,**
**daß** die Unterscheidungseinrichtung einen ersten von einem Mikrocontroller (MC) steuerbaren Schalter (S1) aufweist, der einerseits mit einer weiteren Anschlußklemme (1) und andererseits mit einer Signalquelle (U) verbunden ist.

6. Reinigungsgerät (Z) nach Anspruch 4 oder 5, **dadurch gekennzeichnet,**
**daß** der Mikrocontroller (MC) mit dem Ausgang des Komparators (K) verbunden ist.

7. Reinigungsgerät (Z) nach einem der vorhergehenden Ansprüche,
**dadurch gekennzeichnet,**
**daß** es einen zweiten vom Mikrocontroller (MC) steuerbaren Schalter (S2) aufweist, durch den das Elektrokleingerät (E) ein- und ausschaltbar ist.

## Claims

1. A cleaning device (Z) for a small electric appliance (E), with at least one connection via which it is electrically and/or magnetically connectable to the small electric appliance (E),
**characterized in that** said cleaning device (Z) includes a detecting arrangement enabling the cleaning device (Z) to detect whether it is electrically and/or magnetically connected to the small electric appliance (E).

2. The cleaning device (Z) as claimed in claim 1,
**characterized in that** the detection arrangement further includes an arrangement for discriminating between different types of small electric appliance (E).

3. The cleaning device (Z) as claimed in claim 1 or 2,
**characterized in that** the detection arrangement monitors an electric and/or magnetic quantity prevailing at the connection.

4. The cleaning device (Z) as claimed in claim 1, 2 or 3,
**characterized in that** the detection arrangement includes at least one comparator (K) which compares the electric and/or magnetic quantity prevailing across two terminals (2, 3) with at least one reference value.

5. The cleaning device (Z) as claimed in claim 2, 3 or 4,
**characterized in that** the discriminating arrangement includes a first switch (S1) which is controllable by a microcontroller (MC) and has its one end connected to a further terminal (1) and its other end to a signal source (U).

6. The cleaning device (Z) as claimed in claim 4 or 5,
**characterized in that** the microcontroller (MC) is connected to the output of the comparator (K).

7. The cleaning device (Z) as claimed in any one of the preceding claims,
**characterized in that** it includes a second switch (S2) which is controllable by the microcontroller (MC) and operable to turn the small electric appliance (E) on and off.

## Revendications

1. Appareil de nettoyage (Z) pour un petit appareil électrique (E) comprenant au moins un raccord par le biais duquel il peut être relié électriquement et/ou magnétiquement avec le petit appareil électrique (E), **caractérisé en ce que** l'appareil de nettoyage (Z) présente un dispositif de détection avec lequel l'appareil de nettoyage (Z) peut détecter s'il est relié électriquement et/ou magnétiquement avec le petit appareil électrique (E).

2. Appareil de nettoyage (Z) selon la revendication 1, **caractérisé en ce que** le dispositif de détection présente en plus un dispositif pour faire la différence entre différents types de petits appareils électriques (E).

3. Appareil de nettoyage (Z) selon la revendication 1 ou 2, **caractérisé en ce que** le dispositif de détection surveille une grandeur électrique et/ou magnétique présente au niveau du raccord.

4. Appareil de nettoyage (Z) selon la revendication 1, 2 ou 3, **caractérisé en ce que** le dispositif de détection présente au moins un comparateur (K) qui compare la grandeur électrique et/ou magnétique présente entre deux bornes de raccordement (2, 3) avec au moins une valeur de référence.

5. Appareil de nettoyage (Z) selon la revendication 2, 3 ou 4, **caractérisé en ce que** le dispositif de différenciation présente un premier commutateur (S1) pouvant être commandé par un microcontrôleur (MC) qui est relié d'un côté avec une borne de raccordement (1) supplémentaire et de l'autre côté avec une source de signal (U).

6. Appareil de nettoyage (Z) selon la revendication 4 ou 5, **caractérisé en ce que** le microcontrôleur (MC) est relié avec la sortie du comparateur (K).

7. Appareil de nettoyage (Z) selon l'une des revendications précédentes, **caractérisé en ce qu'**il présente un deuxième commutateur (S2) pouvant être commandé par le microcontrôleur (MC) et par le biais duquel le petit appareil électrique (E) peut être allumé et éteint.
